**Europäisches Patentamt**

**European Patent Office**

**Office européen des brevets**

(11) Numéro de publication: **0 007 876**
**A1**

## (12) DEMANDE DE BREVET EUROPEEN

(21) Numéro de dépôt: **79400536.3**

(22) Date de dépôt: **27.07.79**

(51) Int. Cl.³: **B 65 D 81/34**
**B 65 D 77/30**

(30) Priorité: **28.07.78 FR 7822482**

(43) Date de publication de la demande:
**06.02.80 Bulletin 80/3**

(84) Etats Contractants Désignés:
**AT BE CH DE FR GB IT LU NL SE**

(71) Demandeur: **SOCIETE GENERALE POUR L'EMBALLAGE**
**7, rue Eugène-Flachat**
**F-75849 Paris Cedex 17(FR)**

(72) Inventeur: **Lagneaux, Jean**
**Les Hautes Gouttes - Graix**
**F-42220 Bourg Argental(FR)**

(74) Mandataire: **Eudes, Marcel et al,**
**Saint-Gobain Recherche 39 Quai Lucien Lefranc**
**F-93304 Aubervilliers Cedex(FR)**

(54) Capsule pour dose de produit à distribuer et procédé de distribution de la dose.

(57) L'invention concerne une capsule pour dose de produit à distribuer.

La capsule comporte un corps 10 en forme de verre à fond conique 14 se prolongeant par un appendice central creux 16 fermé à son extrémité, la capsule étant hermétiquement fermée par une pellicule perforable 18 à travers laquelle peut être introduit un agent sous pression pour l'expulsion de la dose, par exemple un gaz ou un liquide diluant. L'appendice central est percé de canaux capillaires 20 initialement obturés à leur extrémité et pouvant être débouchés, afin de laisser la dose s'écouler, en sectionnant l'extrémité de l'appendice.

Application à la distribution de boissons gazeuses.

Fig.1

EP 0 007 876 A1

0007876

1

<u>Capsule pour dose de produit à distribuer</u>

<u>et procédé de distribution de la dose</u>

La présente invention concerne des perfectionnements apportés aux capsules de doses unitaires de produits à distribuer ainsi qu'un procédé de distribution desdites doses.

Les capsules selon l'invention doivent assurer la préservation absolue de la dose conditionnée contre toute pollution. Plus particulièrement, au moment de la distribution de la dose, tout contact doit être évité entre le produit et les éléments de l'appareil distributeur de la dose.

La demande de brevet français n° 75 27285 déposée le 5 Septembre 1975 propose une solution à ce problème pour une capsule du type comportant un corps en forme de gobelet à fond conique se prolongeant par un appendice central creux fermé à son extrémité, la capsule étant hermétiquement fermée par une pellicule perforable à travers laquelle peut être introduit un agent sous pression pour l'expulsion de la dose, par exemple un gaz ou un liquide diluant. La capsule selon cette demande de brevet comprend, d'une part, un disque d'étanchéité relativement souple qui peut être introduit dans la capsule jusqu'à s'encliqueter derrière un bord d'appui continu en assurant l'étanchéité avec une légère contrainte entre le pourtour du disque et la paroi latérale de la capsule, et, d'autre part, des saillies intérieures espacées l'une de l'autre, situées au-delà dudit bord d'appui et sur lesquelles le disque d'étanchéité vient reposer lorsqu'il est poussé par une pression interne, le produit à distribuer étant conditionné dans la partie de la capsule située au-dessus du disque d'étanchéité.

Ainsi, lorsque la pression interne est appliquée à l'intérieur de la capsule, le disque, qui ne repose que par des points espacés de sa périphérie, se déforme de façon que les parties de sa périphérie qui ne sont pas soutenues se soulèvent et s'écartent de la paroi latérale de la capsule, permettant ainsi au produit conditionné de s'écouler vers l'appendice préalablement coupé, qui sert d'orifice de distribution.

La section offerte au passage du produit conditionné, entre la paroi latérale de la capsule et les bords soulevés du disque d'étanchéité, est relativement faible et introduit donc une perte de charge suffisante pour assurer un écoulement lent et régulier du produit. De plus, avant la déformation du disque par suite de l'application de la pression interne, la partie de capsule située au-dessus du disque est hermétique, de sorte qu'aucun contact entre le produit et le couteau ne se produit lors du sectionnement de l'appendice. Grâce à un tel disque, il est donc possible d'effectuer sans précipitation la coupe de l'appendice puis le retrait du couteau.

Cependant, une telle capsule présente les inconvénients suivants :

- le temps d'évacuation de la dose dépend de la viscosité et de la température du contenu. Pour une pression d'expulsion donnée, plus la viscosité est élevée et la température basse, moins la déformation du disque d'étanchéité est importante : il en résulte que la dose pourrait ne pas être totalement évacuée pendant le temps imparti. Au contraire, avec une viscosité faible et une température élevée, la dose risque d'être évacuée trop rapidement ;

- la pression du gaz propulseur et donc la consommation en gaz doivent être assez élevées pour permettre l'expulsion totale de la dose ;

- le disque d'étanchéité est plus ou moins déformable d'une fabrication à l'autre du fait des tolérances de qualité de la matière au cours de sa fabrication ;

- dans le cas d'un remplissage de la capsule à des températures de l'ordre de 60 à 90°C, le disque d'étanchéité se déforme sous l'effet de la chaleur et ne retrouve pas sa forme initiale plate, même après refroidissement. Il n'assure donc plus la rétention du produit dans la partie supérieure de la capsule ;

- la machine de remplissage des capsules est compliquée et coûteuse puisqu'elle doit comporter un dispositif de mise en place des disques d'étanchéité ;

- enfin, le coût du disque et la difficulté de sa mise en place du fait de sa faible épaisseur se traduisent par une augmentation sensible du prix de revient de la capsule.

La présente invention a pour but d'apporter une solution au problème posé ci-dessus en remplaçant le disque d'étanchéité par des moyens qui présentent les mêmes avantages que le disque, mais qui sont dépourvus de ces inconvénients.

L'invention concerne une capsule du type mentionné précédemment et qui se caractérise en ce que l'appendice central est percé de canaux capillaires initialement obturés à leur extrémité et pouvant être débouchés, afin de laisser la dose s'écouler, en sectionnant l'extrémité de l'appendice.

En raison de sa tension superficielle, le liquide conditionné dans la capsule ne peut pénétrer dans les canaux capillaires. Des bulles d'air restent emprisonnées dans les canaux quelles que soient les manipulations subies par la capsule ou les variations de la température ambiante.

Il est possible de prévoir un seul canal, mais il est préférable d'en prévoir plusieurs, quatre par exemple, car la section maximale de chacun ne doit pas dépasser 1 à 2mm$^2$ environ si l'on veut que le système joue correctement son rôle.

Dès que l'appendice est sectionné, les canaux se remplissent de liquide jusqu'à rétablissement de l'équilibre entre la pression régnant à l'intérieur de la capsule et la pression extérieure. Il peut même arriver qu'une goutte se forme à l'extrémité sectionnée de l'appendice avant que le couteau n'ait été retiré.

Pour éviter cet inconvénient, il suffit de créer sur le couvercle de la capsule une légère dépression pendant la courte durée du sectionnement.

Un mode de réalisation de l'invention sera décrit à

4

présent en regard du dessin annexé dans lequel :

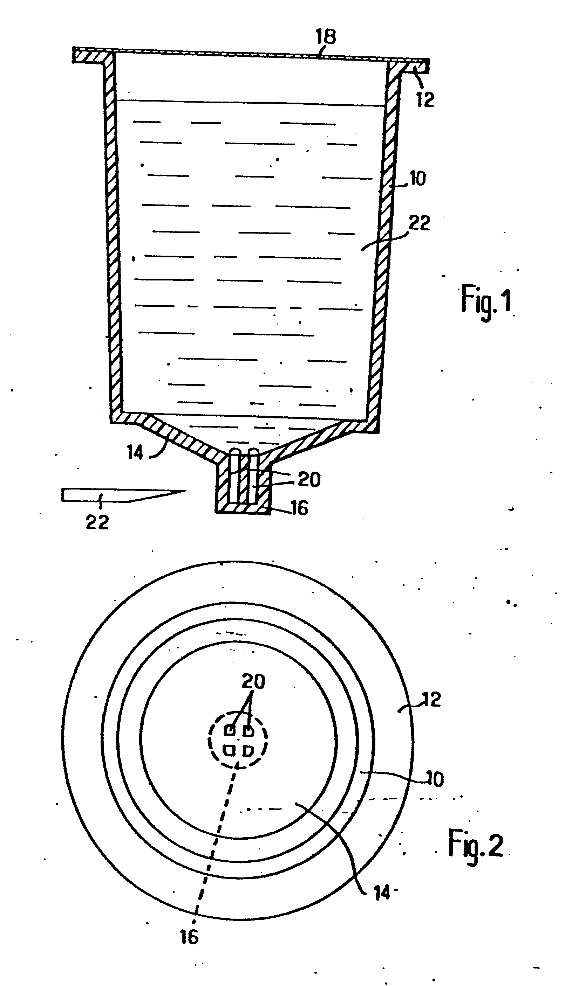

La figure 1 est une vue en coupe axiale de la capsule remplie, avant utilisation ; et

La figure 2 est une vue en plan de la capsule, supposée vide et dépourvue de son couvercle.

Le corps de capsule représenté sur les figures est réalisé en une matière thermoplastique par moulage par injection. Il comporte une paroi latérale 10 de forme légèrement tronconique se raccordant, au niveau de sa grande base supérieure, à un rebord annulaire 12 s'étendant radialement vers l'extérieur, et au niveau de sa petite base, à un fond 14 en forme d'entonnoir. Le fond se prolonge par un appendice central 16. La capsule est fermée par une pellicule perforable 18, collée ou thermosoudée sur le rebord 12.

Selon l'invention, l'appendice 16 est traversé par une pluralité, quatre dans le cas illustré, de canaux capillaires 20 parallèles à l'axe de la capsule. Les canaux 20 sont ouverts à leur extrémité qui débouche à l'intérieur de la capsule et sont fermés à leur extrémité opposée.

Comme on l'a déjà expliqué, lors du remplissage de la capsule avec la dose 22, des bulles d'air restent emprisonnées dans les canaux 20 et empêchent le liquide de pénétrer dans ces derniers.

Au moment de la distribution de la dose, la capsule est amenée à une tête de soutirage, non représentée, dans laquelle la pellicule 18 est perforée et une dépression est momentanément créée sur la dose pendant le temps que dure le sectionnement de l'appendice 16, au moyen d'un couteau 22. La dépression a pour effet d'empêcher le remplissage des canaux 20 et la formation de gouttes de liquide à l'extrémité sectionnée de l'appendice 16. Une fois que le sectionnement est terminé et que le couteau a été complètement retiré, on annule la dépression et on applique à la dose une pression fournie, soit par un gaz, soit par un liquide diluant, de façon à expulser la dose à travers les canaux 20. On pourra utiliser avantageusement une petite pompe réversible, fonctionnant en pompe à vide durant la phase de dépression et en compresseur durant la phase d'expulsion de la dose.

5

## REVENDICATIONS

1. Capsule pour dose de produit à distribuer, du type comportant un corps en forme de verre à fond conique se prolongeant par un appendice central creux fermé à son extrémité, la capsule étant hermétiquement fermée par une pellicule perforable à travers laquelle peut être introduit un agent sous pression pour l'expulsion de la dose, par exemple un gaz ou un liquide diluant, caractérisée en ce que l'appendice central est percé de canaux capillaires initialement obturés à leur extrémité et pouvant être débouchés, afin de laisser la dose s'écouler, en sectionnant l'extrémité de l'appendice.

2. Capsule selon la revendication 1, caractérisée en ce que les canaux ont chacun une section inférieure à 2 $mm^2$.

3. Procédé de distribution de la dose contenue dans la capsule selon la revendication 1, caractérisé en ce qu'il consiste à perforer la pellicule, à sectionner l'appendice, à créer une dépression sur la dose tout le temps que dure le sectionnement de l'appendice et jusqu'au retrait final de l'instrument de sectionnement et enfin à appliquer une pression sur la dose de façon à l'expulser à travers les canaux capillaires.

000787

1/1

Fig.1

Fig.2

0007876

<table>
<tr><td colspan="2"></td></tr>
</table>

**Office européen des brevets**

**RAPPORT DE RECHERCHE EUROPEENNE**

Numéro de la demande

EP 79 40 0536

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernée | |
| D | <u>FR - A - 2 322 796</u> (MANARESI) <br> * Page 3, ligne 12 – page 4, ligne 39; figures 1-8 * <br> -- | 1,3 | B 65 D 81/34 <br> B 65 D 77/30 |
| A | <u>DE - A - 2.063 398</u> (KANTOR INTER- NATIONAL) <br> * Page 4, ligne 9 – page 6, dernière ligne; figures 1-6 * <br> ---- | 1,3 | |

**DOMAINES TECHNIQUES RECHERCHES (Int. Cl. ³)**

B 65 D
A 61 J
A 47 J

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 22-10-1979 | MARTENS |

OEB Form 1503.1   06.78